# EUROPÄISCHE PATENTSCHRIFT

(11) **EP 2 711 794 B1**
(45) Veröffentlichungstag und Bekanntmachung des Hinweises auf die Patenterteilung: **12.11.2014**
(21) Anmeldenummer: 12185821.1
(22) Anmeldetag: 25.09.2012
(51) Int. Cl.: G05B 19/042, G05B 19/05, G06F 9/44, G05B 19/418

(54) **Verfahren zur zeitweiligen Separierung von Objektdaten von Entwurfsmodellen**
Method for temporarily separating object data of design models
Procédé de séparation intermittente de données d'objets vis-à-vis de modèles de projet

(43) Veröffentlichungstag der Anmeldung: 26.03.2014
(73) Patentinhaber: dSPACE digital signal processing and control engineering GmbH, 33102 Paderborn (DE)
(72) Erfinder: Pietzsch, Torsten, 33100 Paderborn (DE)

(56) Entgegenhaltungen:
- EP-A2- 1 914 610
- WO-A1-2010/028760
- WO-A2-00/02107

## Beschreibung

### GEBIET DER ERFINDUNG

Die Erfindung betrifft ein Verfahren zum Bearbeiten eines rechnergestützten Entwurfsmodells zur Entwicklung von elektronischen Steuerungseinheiten in einer Entwurfsumgebung.

Im Rahmen dieser Erfindung beziehen sich die Entwurfsmodelle auf Modelle für eine mechatronisch realisierte Steuerung und / oder Regelung, bei denen physikalische Größen für Steuergeräte bedatet, d.h. mit Zusatzdaten versehen, werden sollen. Diese Größen werden mittels Sensoren erfasst und in einem Steuergerät durch einen Algorithmus in Stellgrößen für Aktuatoren verarbeitet. Ein bekanntes Anwendungsprogramm auf diesem Gebiet ist zum Beispiel TargetLink. Dort können Zusatzdaten zu einem Entwurfsmodell angelegt werden wie z.B. Informationen über die Skalierung (Umrechnung der erfassten physikalischen Größe in Zahlendarstellung im Steuergerät), welche Werte später kalibriert werden können, ob die Variablen nach der Codegenerierung im RAM oder ROM gespeichert werden, mit welcher Sichtbarkeit sie angelegt werden, ob eine Variable optimierbar ist (wenn sie für Kalibrier- bzw. Diagnosesysteme zugreifbar sein muss, darf sie nicht "wegoptimiert" werden). Diese Zusatzinformationen sind dabei nicht für die eigentliche Entwurfsumgebung relevant, sondern werden von einem weiteren Anwendungsprogramm benötigt. Beispielsweise stellen die Zusatzdaten für TargetLink codegenerierungsspezifische Daten bereit. Die Erfindung lässt sich jedoch auch analog auf Zusatzdaten für Requirements-Engineering- oder Kalibrierungswerkzeuge übertragen.

### HINTERGRUND

Im Umfeld der modellbasierten Entwicklung ist es üblich, die Entwurfsmodelle mit Zusatzdaten für die unterschiedlichsten Entwicklungsschritte anzureichern.

Üblicherweise werden diese Zusatzdaten direkt an das Modellobjekt angeheftet und sind damit persistent mit diesem verknüpft. Sobald die Zusatzdaten mit den Modellobjekten verknüpft sind, kann das Entwurfsmodell nicht mehr separat von den Zusatzdaten bearbeitet werden.

### DIE ERFINDUNG IM ÜBERBLICK

Aufgabe der vorliegenden Erfindung ist es daher ein Verfahren bereitzustellen, welches die flexible Bearbeitung eines Entwurfsmodells erlaubt, unabhängig davon, ob Zusatzdaten für die einzelnen Schritte zur Verfügung stehen oder nicht.

Erfindungsgemäß wird diese Aufgabe gelöst durch ein Verfahren der eingangs genannten Art, wobei das Entwurfsmodell mindestens ein Modellobjekt mit ersten Daten umfasst, wobei die ersten Daten Zusatzdaten sind, die lediglich für einzelne Entwicklungsschritte der Steuerungsvorrichtung gebraucht werden. Das Verfahren umfasst ferner die folgenden Schritte:
Einlesen aller Modellobjekte des Entwurfsmodells in die Entwicklungsumgebung;
Einlesen einer Verknüpfungsliste, welche jedem Modellobjekt einen jeweilig global eindeutigen Schlüssel zuordnet;
entweder, wenn die ersten Daten zur Verfügung stehen:
   Einlesen der ersten Daten von einem ersten Speicherort, wobei die ersten Daten den global eindeutigen Schlüssel beinhalten; und anschließend
   Zuordnen der ersten Daten zu dem Modellobjekt an Hand des globalen eindeutigen Schlüssels, so dass die ersten Daten während der Bearbeitung des Entwurfsmodells zur Verfügung stehen;
   oder, wenn die ersten Daten nicht zur Verfügung stehen:
Zuordnen des global eindeutigen Schlüssels zu dem Modellobjekt, so dass der global eindeutige Schlüssel während der Bearbeitung des Entwurfsmodells zur Verfügung steht;
Bearbeiten des Entwurfsmodells;
Speichern der Verknüpfungsliste, in der der global eindeutige Schlüssel dem Modellobjekt zugeordnet wird; wobei das Speichern beinhaltet:
   wenn die ersten Daten während der Bearbeitung zur Verfügung standen, Erzeugen eines neuen global eindeutigen Schlüssels, welcher den vorherigen global eindeutigen Schlüssel ersetzt,
   wenn die ersten Daten während der Bearbeitung nicht zur Verfügung standen, Beibehalten des global eindeutigen Schlüssels;
   Speichern der ersten Daten zusammen mit dem global eindeutigen Schlüssel;
   Speichern aller Modellobjekte des Entwurfsmodells.

Der Erfindung liegt die Erkenntnis zu Grunde, dass mit steigender Komplexität der Entwicklungsschritte, eine steigende Anzahl von Entwicklungsbeteiligten am Entwicklungsprozess mitwirkt. Dabei wurde erkannt, dass die persistent Speicherung von Zusatzdaten zu einem Entwurfsmodell dann unerwünscht ist, wenn das Entwurfsmodell zwischen verschiedenen Entwicklungsbeteiligten ausgetauscht werden soll, jedoch bestimmte Informationen zum Schutz des geistigen Eigentums nicht offengelegt werden sollen.

Ein wesentlicher Vorteil der vorliegenden Erfindung besteht darin, dass durch die Verwendung einer Verknüpfungsliste zwischen den Zusatzdaten und dem global eindeutigen Schlüssel, die Möglichkeit einer Bearbeitung des Entwurfsmodells auch für den Fall besteht, dass die Zusatzdaten nicht zur Verfügung stehen. In diesem Fall wird das Entwurfsmodell nach Bearbeitung mit denselben global eindeutigen Schlüsseln für die jeweiligen Modellobjekte gespeichert, wie sie aus der eingangs eingelesene Verknüpfungsliste den Modellobjekten angeheftet wurden. Dieser global eindeutige Schlüssel wird nach Bearbeitung des Entwurfsmodells in der Verknüpfungsliste gespeichert. Wird das veränderte Entwurfsmodell nun von einem Entwicklungsbeteiligten geöffnet, welchem die Zusatzdaten zur Verfügung stehen, werden diese über den eindeutigen Schlüssel wieder an das Modell angehängt. Stehen die Zusatzdaten zur Verfügung und werden im Zuge der Weiterentwicklung des Entwicklungsmodells erweitert oder verändert, so wird ein neuer global eindeutiger Schlüssel erzeugt, welcher in die Verknüpfungsliste eingetragen wird.

Erfindungsgemäß wurde erkannt, dass über eine zeitweise Separierung der Daten nicht nur ein Schutz geistigen Eigentums erzielt werden kann, sondern darüberhinaus Entwurfsmodell und Zusatzdaten verschiedener Modellobjekte getrennt voneinander vor Veränderungen geschützt werden können, indem man die entsprechenden Dateien in einem Versionskontrollsystem getrennt voneinander verwaltet. Beispielsweise ist es so möglich, dass die Modellstruktur und Objektparametrierung unverändert bleibt und nur die Zusatzdaten verändert werden können, die für eine Codegenerierung aus dem Modell heraus verändert werden müssen.

Das nicht zur Verfügung stehen der ersten Daten umfasst dabei die Fälle, in denen die ersten Daten nicht vorhanden sind, die ersten Daten durch ein Passwort oder durch eine Zugriffsberechtigung geschützt werden.

Gemäß einer weiteren vorteilhaften Ausführungsform kann das Verfahren derart fortgestaltet werden, dass die Verknüpfungsliste Zugriffsberechtigungen für verschiedene Benutzer oder Benutzergruppen definiert, und der Schritt des Zuordnens der ersten Daten zu dem Modellobjekt, wenn die ersten Daten vorhanden sind, umfasst:
Überprüfen einer Zugriffsberechtigung eines Benutzers für die ersten Daten;
wenn ein Zugriffsrecht des Benutzers besteht, Zuordnen der ersten Daten zu dem Modellobjekt, so dass die ersten Daten während der Bearbeitung des Entwurfsmodells zur Verfügung stehen;
wenn kein Zugriffsrecht besteht, Zuordnen des global eindeutigen Schlüssels zu dem Modellobjekts, so dass nur der global eindeutige Schlüssel während der Bearbeitung des Entwurfsmodells zur Verfügung steht.

Eine weitere Ausführungsform des erfindungsgemäßen Verfahrens umfasst das Einlesen aller Modellobjekte des Entwurfsmodells in die Entwicklungsumgebung. Dieser Schritt beinhaltet:
Erstellen und Einlesen des ersten Modellobjektes aus einer Modellbibliothek.

Dieses Verfahren kann ferner fortgebildet werden, indem der Schritt "Einlesen einer Verknüpfungsliste, welche dem Modellobjekt einen global eindeutigen Schlüssel zuordnet" beinhaltet:
Einlesen einer zu dem Modellobjekt gehörenden Verknüpfungsliste aus der Modellbibliothek, welche dem Modellobjekt einen global eindeutigen Schlüssel zuordnet.

Erfindungsgemäß wurde erkannt, dass wenn für ein Entwurfsmodell auch Modellobjekte aus Bibliotheken instanziiert werden, die Instanzen normalerweise sowohl die (Teil-) Modellstruktur als auch die dazugehörigen Daten erben. Das vorliegende Verfahren erlaubt darüberhinaus Konstellationen, in denen die Zusatzdaten von Instanz zu Instanz voneinander variieren können, so dass eine gewünschte Identität der (Teil-)Modellstruktur besteht, eine Identität der Zusatzdaten eines Modellobjektes aber nicht zwangsweise vorgeschrieben ist. Bei mehrfacher Verwendung eines Modellobjektes, welches aus einer Modellobjektbibliothek instanziiert wird, können daher erfindungsgemäß verschiedene Zusatzdaten angehängt werden.

### BESCHREIBUNGEN DER ZEICHNUNGEN

- Figur 1:: Flussdiagramm einer Ausführungsform des erfindungsgemäßen Verfahrens für den Fall, dass die Zusatzdaten zur Verfügung stehen.
- Figur 2:: Flussdiagramm einer Ausführungsform des erfindungsgemäßen Verfahrens für den Fall, dass die Zusatzdaten nicht zur Verfügung stehen.
- Figur 3:: Übersicht über eine weitere bevorzugte Ausführungsform des Verfahrens welche berücksichtigt, dass Modellobjekte aus einem Modellbibliotheksobjekt instanziiert werden können.
- Figur 4:: Flussdiagramm einer Ausführungsform des erfindungsgemäßen Verfahrens für den Fall, dass Modellobjekte aus einer Bibliothek geladen werden.

### DETAILLIERTE BESCHREIBUNG

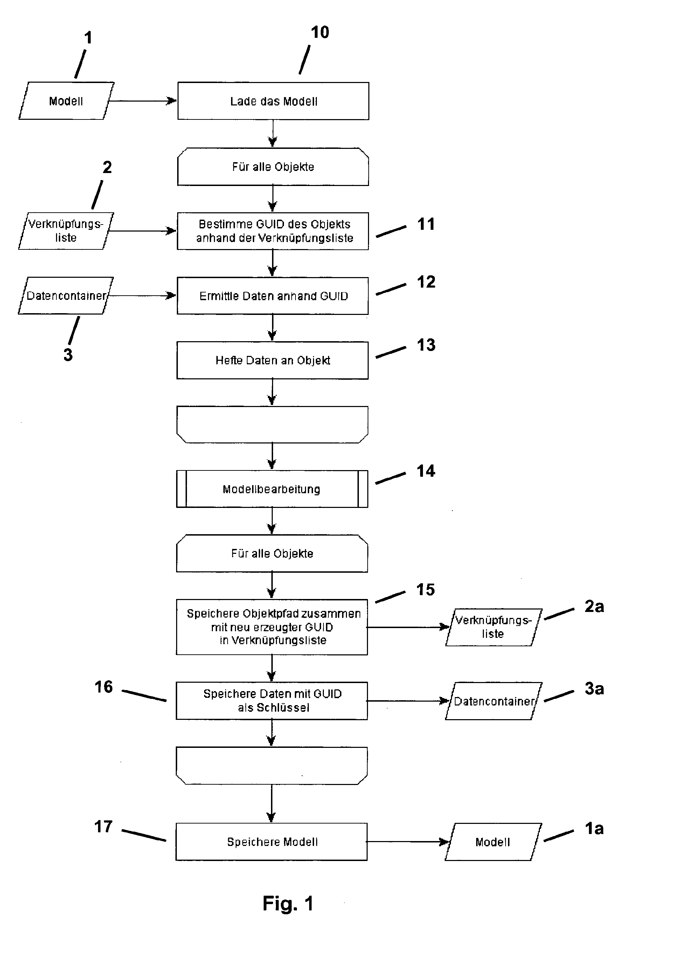

Figur 1 zeigt ein Flussdiagramm einer bevorzugten Ausführungsform des erfindungsgemäßen Verfahrens für den Fall, dass die Zusatzdaten während der Bearbeitung zur Verfügung stehen. Zu Beginn des Verfahrens wird das Entwurfsmodell 1 in eine computergestützte Entwicklungsumgebung geladen 10. Die Verknüpfungsliste 2 wird ebenfalls in die Entwicklungsumgebung geladen, so dass sie zur weiteren Verwendung zur Verfügung steht. Anschließend erfolgt für jedes Modellobjekt des Entwurfsmodells eine Bestimmung eines global eindeutigen Schlüssels (GUID, für global unique identifier) 11, welcher anhand der Verknüpfungsliste 2 dem jeweiligen Modellobjekt zugeordnet wird. Über den global eindeutigen Schlüssel werden nun die zu einem Modellobjekt gehörigen Zusatzdaten 3 ermittelt 12. Diese Daten werden in einem weiteren Schritt an das Modellobjekt angehängt 13, wobei dies sowohl durch direktes Anheften der Zusatzdaten an das Entwicklungsmodel erfolgen kann als auch durch Anheften dynamischer Links auf die jeweiligen Speicherorte der Zusatzdaten. Anschließend kann das Entwurfsmodell in vollem Umfang bearbeitet werden. Dabei können sowohl Veränderungen, Erweiterungen oder Löschungen am Entwurfsmodell selber erfolgen, als auch Zusatzdaten der Modellobjekte verändert, erweitert oder gelöscht werden. Nach Beendigung der Bearbeitung wird für jedes Modellobjekt ein neuer global eindeutiger Schlüssel erzeugt und in einer neuen Verknüpfungsliste 2a mit dem Modellobjekt verknüpft. Dies erfolgt durch die Zuordnung des Modellobjektpfades zu dem jeweiligen global eindeutigen Schlüssel des Modellobjektes. Die Verknüpfungsliste wird dann anschließend separat vom Entwurfsmodell oder in einer Containerdatei zusammen mit dem Entwurfsmodell gespeichert. Unter einer Containerdatei wird eine Datei verstanden, die ihrerseits unterschiedliche Dateien und Dateitypen enthalten kann. Die Zusatzdaten 3a eines jeden Modellobjektes werden zusammen mit dem neu erzeugten global eindeutigen Schlüssel ebenfalls separatgespeichert 16. Nachdem die Separierung der Zusatzdaten von dem Entwurfsmodell 1a erfolgt ist, wird das Entwurfsmodell in einem letzten Schritt gespeichert 17.

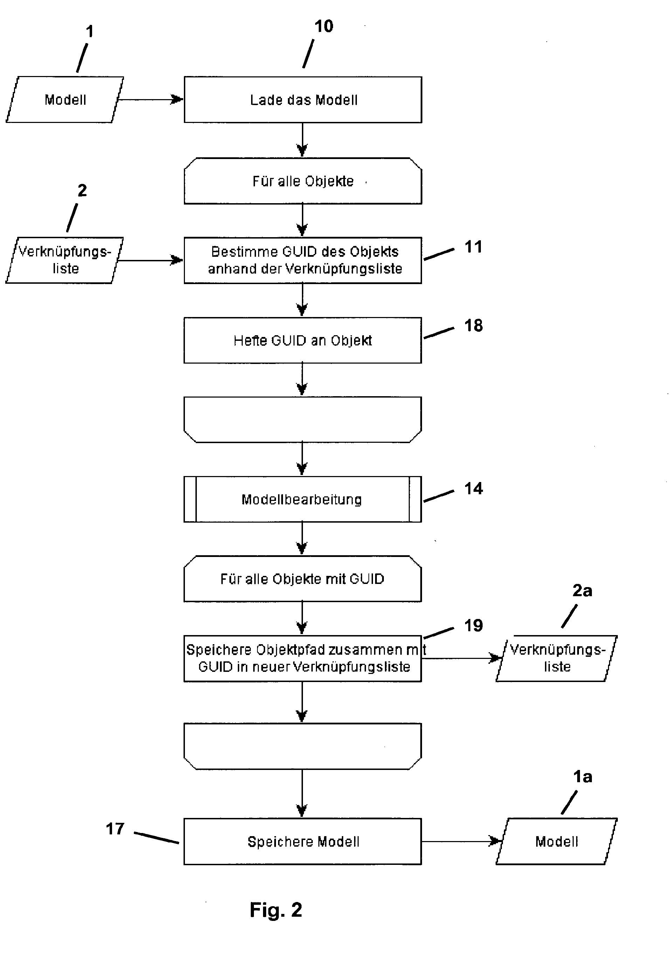

Figur 2 zeigt ein weiteres Flussdiagramm für eine Ausführungsform des erfindungsgemäßen Verfahrens, bei welchem die Zusatzdaten der Modellobjekte nicht zur Verfügung stehen. Das Verfahren beginnt mit dem Laden des Entwurfsmodells 1 in die computergestützte Entwicklungsumgebung. Wie in der vorangegangenen Ausführungsform wird über eine ebenfalls in die Entwicklungsumgebung geladenen Verknüpfungsliste 2 jedem Modellobjekt ein global eindeutiger Schlüssel zugeordnet. Da keine Zusatzdaten für die Modellobjekte zur Verfügung stehen, wird der global eindeutige Schlüssel selbst an das Modellobjekt angeheftet 18. Anschließend wird das Entwurfsmodell - ohne Verwendung der Zusatzdaten - bearbeitet 14. Wird ein Modellobjekt kopiert, so erhält die Kopie den gleichen global eindeutigen Schlüssel wie das Original. Nach der Bearbeitung des Entwurfsmodells wird eine Verknüpfungsliste 2a gespeichert, welche die den Modellobjekten angehefteten global eindeutigen Schlüssel enthält. Wurde ein Modellobjekt aus dem Modell entfernt, so wird auch die Zuordnung des zugehörigen global eindeutigen Schlüssels zu den Zusatzdaten aus der Verknüpfungsliste entfernt. Wurde ein Modellobjekt im Rahmen der Bearbeitung angelegt, so wird für dieses Modellobjekt ein neuer global eindeutiger Schlüssel vergeben und in der Verknüpfungsliste ein neuer Eintrag mit diesem global eindeutigen Schlüssel angelegt. Diesem neuen Eintrag können allerdings noch keine Zusatzdaten oder nur Default-Daten zugeordnet werden. Als letzten Schritt wird das bearbeitete Entwurfsmodell 1a gespeichert.

Neben den detailliert beschriebenen Fällen, in denen einem Modellentwickler entweder die Zusatzdaten sämtlicher Modellobjekte zur Verfügung stehen oder dem Fall, indem für keines der Modellobjekte Zusatzdaten zur Verfügung stehen, umfasst das Verfahren auch Fälle, in denen nur für einen Teil der Modellobjekte Zusatzdaten zur Verfügung stehen. Für diejenigen Modellobjekte, für die Zusatzdaten zur Verfügung stehen, finden dann die Verfahrensschritte 11-13 - sowie nach erfolgter Modellbearbeitung - die Schritte 15 und 16 Anwendung; während für die andere Modellobjekte, für die die Zusatzdaten nicht zur Verfügung stehen, die Verfahrensschritte 11 und 18 Anwendung, sowie 19 finden.

Dabei kann das Nicht-zur-Verfügung-stehen der Zusatzdaten eines Modellobjektes dadurch zustande kommen, dass der physikalische Speicherort dieser Daten, dem Modellentwickler tatsächlich nicht zur Verfügung steht. Es ist aber auch möglich, dass die Zusatzdaten modellobjekt-abhängig oder - unabhängig mit einem Passwort geschützt sind und der Zugriff verweigert wird, sofern der Modellentwickler, die zugehörigen Passwörter für die einzelnen Modellobjekte nicht kennt. Auch in diesem Fall stehen die Zusatzdaten des passwortgeschützten Modellobjektes für eine Modellbearbeitung nicht zur Verfügung. Vom Prinzip her ähnlich wie beim passwortgeschützten Zugriff können auch personenbezogene Zugriffsrechte verteilt werden. Diese können zum Beispiel als weiterer Eintrag in den Verknüpfungslisten geführt werden, so dass die Entwicklungsumgebung eigenständig erkennt, ob ein Modellentwickler berechtigt ist, auf gewissen Daten zuzugreifen. Generell kann der Zugriff dabei differenziert erfolgen. Es können gesonderte Berechtigungen erfolgen, die einem Modellentwickler eine Leseberechtigung, eine Schreibberechtigung oder eine Löschberechtigung für die Zusatzdaten einräumen.

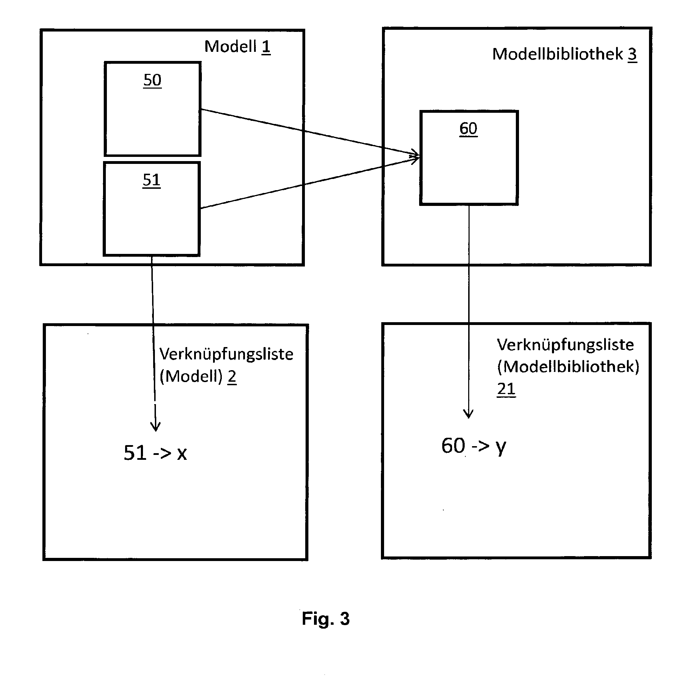

Figur 3 zeigt eine Übersicht über eine weitere bevorzugte Ausführungsform des Verfahrens. Diese Ausführungsform berücksichtigt, dass Modellobjekte 50 und 51 aus einem Modellbibliotheksobjekt 60 instanziiert werden können. Dabei wird erfindungsgemäß davon ausgegangen, dass das Modellbibliotheksobjekt 60 eine zugehörige Verknüpfungsliste 21 enthält. Es ist für die Erfindung unerheblich, ob die Verknüpfungsliste 21 der Modellbibliothek 3 zusammen mit der Verknüpfungsliste 2 des Entwurfsmodells 1 in einer Datei oder separat davon gespeichert ist. Wird ein Modellobjekt 50, 51 aus einem Modellbibliotheksobjekt 60 instanziiert, erhält es die Zusatzdaten des Modellobjektes 50, 51 gemäß der Verknüpfungsliste 21 der Modellbibliothek 3 oder falls diese nicht zur Verfügung steht den global eindeutigen Schlüssel des Modellobjekts 50 gemäß der Verknüpfungsliste 21 der Modellbibliothek 3. Für dieses Modellobjekt 50 erfolgt die Verwaltung der Zusatzdaten also generell nicht über die Verknüpfungsliste 2 des Entwurfsmodells 1 sondern über die Verknüpfungsliste 21 der Modellbibliothek 3. Wird allerdings ein Modellobjekt 50, welches aus einem Modellbibliotheksobjekt 60 instanziiert wurde, mit anderen Zusatzdaten als denen gemäß der Verknüpfungsliste 21 der Modellbibliothek verknüpft oder die mit dem Modellobjekt 50 verknüpften Zusatzdaten verändert, so werden die Zusatzdaten des entsprechenden Modellobjekts 50 anschließend in der Verknüpfungsliste 2 des Entwurfsmodellmodells verwaltet.

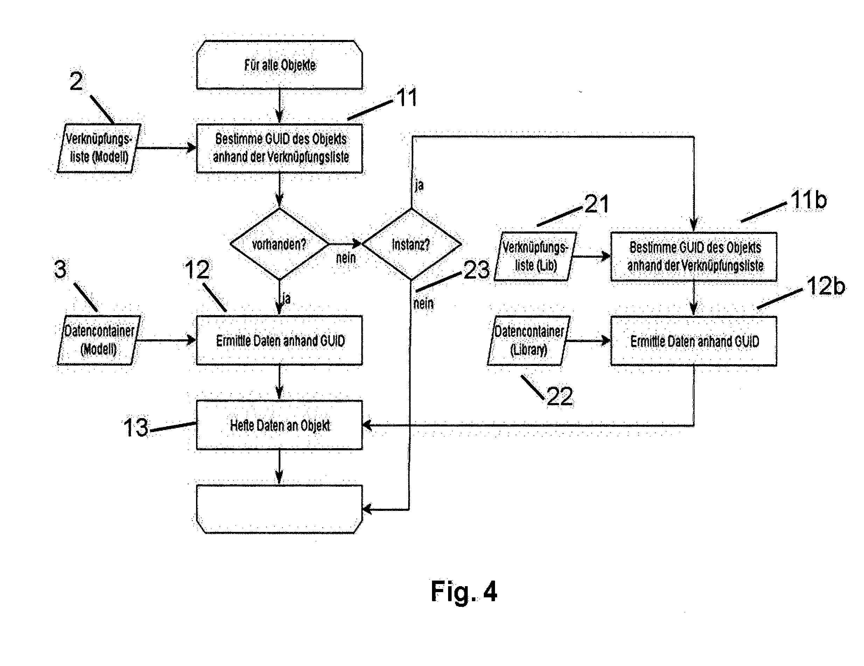

Figur 4 zeigt ein Flussdiagramm zu dieser Ausführungsform des erfindungsgemäßen Verfahrens. In dieser Ausführungsform wird nach dem Laden des Entwicklungsmodells und der Verknüpfungsliste 2 zuerst für jedes Modellobjekt geprüft, ob ein global eindeutiger Schlüssel anhand der Verknüpfungsliste 2 dem Modellobjekt zugeordnet werden kann. Ist dies der Fall wird das Modellobjekt mit den zugeordneten Zusatzdaten verknüpft oder sollten diese nicht zur Verfügung stehen, wird dem Modellobjekt der global eindeutige Schlüssel zugeordnet. Dabei ist es unerheblich, ob das Modellobjekt eine Instanz eines Bibliotheksobjekts mit eigenen oder veränderten Zusatzdaten ist oder keine Instanz eines Bibliotheksobjekts. Kann einem Modellobjekt kein global eindeutiger Schlüssel anhand der Verknüpfungsliste 2 des Modells zugeordnet werden, so wird davon ausgegangen, dass es sich um eine Instanz eines Modellobjekts aus einer Modellbibliothek handelt. In diesem Fall wird der global eindeutige Schlüssel des Modellobjekts anhand des global eindeutigen Schlüssels der zugehörigen Verknüpfungsliste 21 der Modellbibliothek bestimmt und anschließend die entsprechenden Zusatzdaten dem Modellobjekt zugeordnet. Falls die Zusatzdaten nicht zur Verfügung stehen wird den Modellobjekten aus der Modellbibliothek der global eindeutige Schlüssel selber angeheftet. Das Verfahren berücksichtigt weiterhin den Fall, dass einem Modellobjekt weder ein global eindeutiger Schlüssel über die Verknüpfungsliste 2 noch über die Verknüpfungsliste 21 zugeordnet werden kann 23. In diesem Fall erfolgt keine Zuordnung eines global eindeutigen Schlüssels vor der Bearbeitung des Modells, allerdings würde beim Speichern des Modells - wie für ein neu angelegtes Objekt bereits beschrieben - ein neuer global eindeutiger Schlüssel für das entsprechende Modellobjekt generiert.

## Patentansprüche

1. Verfahren zum Bearbeiten eines rechnergestützten Entwurfsmodells zur Entwicklung von elektronischen Steuerungseinheiten in einer Entwurfsumgebung, wobei das Entwurfsmodell mindestens ein Modellobjekt mit ersten Daten umfasst,
wobei die ersten Daten Zusatzdaten sind, die lediglich für einzelne Entwicklungsschritte der Steuerungsvorrichtung gebraucht werden
mit den Schritten:
Einlesen aller Modellobjekte des Entwurfsmodells in die Entwicklungsumgebung;
Einlesen einer Verknüpfungsliste, welche jedem Modellobjekt einen jeweilig global eindeutigen Schlüssel zuordnet;
entweder, wenn die ersten Daten zur Verfügung stehen:
Einlesen der ersten Daten von einem ersten Speicherort, wobei die ersten Daten den global eindeutigen Schlüssel beinhalten; und anschließend
Zuordnen der ersten Daten zu dem Modellobjekt an Hand des global eindeutigen Schlüssels, so dass die ersten Daten während der Bearbeitung des Entwurfsmodells zur Verfügung stehen;
oder, wenn die ersten Daten nicht zur Verfügung stehen:
Zuordnen des global eindeutigen Schlüssels zu dem Modellobjekt, so dass der global eindeutige Schlüssel während der Bearbeitung des Entwurfsmodells zur Verfügung steht;
Bearbeiten des Entwurfsmodells;
Speichern der Verknüpfungsliste, in der der global eindeutige Schlüssel dem Modellobjekt zugeordnet wird; wobei das Speichern beinhaltet:
wenn die ersten Daten während der Bearbeitung zur Verfügung standen, Erzeugen eines neuen global eindeutigen Schlüssels, welcher den vorherigen global eindeutigen Schlüssel ersetzt,
wenn die ersten Daten während der Bearbeitung nicht zur Verfügung standen, Beibehalten des global eindeutigen Schlüssels;
Speichern der ersten Daten zusammen mit dem global eindeutigen Schlüssel;
Speichern aller Modellobjekte des Entwurfsmodells.

2. Verfahren nach Anspruch 1, wobei die ersten Daten nicht zur Verfügung stehen, wenn
(i) die ersten Daten nicht vorhanden sind;
(ii) die ersten Daten durch ein Passwort geschützt sind, oder
(iii) die ersten Daten durch eine Zugriffsberechtigung geschützt sind.

3. Verfahren nach einem der vorangegangenen Ansprüche, wobei die Verknüpfungsliste Zugriffsberechtigungen für verschiedene Benutzer oder Benutzergruppen definiert, und Zuordnen der ersten Daten zu dem Modellobjekt, wenn die ersten Daten vorhanden sind, umfasst:
Überprüfen einer Zugriffsberechtigung eines Benutzers für die ersten Daten;
wenn ein Zugriffsrecht des Benutzers besteht, Zuordnen der ersten Daten zu dem Modellobjekt, so dass die ersten Daten während der Bearbeitung des Entwurfsmodells zur Verfügung stehen;
wenn kein Zugriffsrecht des Benutzers besteht, Zuordnen des global eindeutigen Schlüssels zu dem Modellobjekt, so dass nur der global eindeutige Schlüssel während der Bearbeitung des Entwurfsmodells zur Verfügung steht.

4. Verfahren nach Anspruch 1, wobei Einlesen aller Modellobjekte des Entwurfsmodells in die Entwicklungsumgebung beinhaltet:
Erstellen und Einlesen des ersten Modellobjektes aus einer Modellbibliothek; und wobei Einlesen einer Verknüpfungsliste, welche dem Modellobjekt einen global eindeutigen Schlüssel zuordnet, beinhaltet:
Einlesen einer zu dem Modellobjekt gehörenden Verknüpfungsliste aus der Modellbibliothek, welche dem Modellobjekt einen global eindeutigen Schlüssel zuordnet.

5. Verfahren nach Anspruch 4, wobei optional dem Modellobjekt ein eigener eindeutiger globaler Schlüssel zugeordnet wird oder es den globalen Schlüssel Modellbibliotheksobjekts bekommt.

## Claims

1. A method for processing a computer-aided draft model for developing electronic control units in a design environment, wherein
the design model comprises at least one model object having first data,
wherein the first data are additional data needed only for individual development steps of the control unit
comprising the steps:
reading in all model objects of the design model into the development environment;
reading in a link list associating a corresponding globally unique key with each model object;
either, if the first data are available:
reading in the first data from a first memory location, wherein the first data comprise the globally unique key; and then
associating the first data with the model object by means of the globally unique key, so that the first data are available during processing of the design model;
or, if the first data are not available:
associating the globally unique key with the model object so that the globally unique key is available during processing of the design model;
processing the design model;
saving the link list in which the globally unique key is associated with the model object, wherein saving comprises:
if the first data were available during processing, generating a new globally unique key for replacing the previous globally unique key,
if the first data were not available during processing, retaining the globally unique key;
saving the first data together with the globally unique key;
saving all model objects of the design model.

2. The method according to claim 1, wherein the first data are not available, if
(i) the first data are not present;
(ii) the first data are protected by a password, or
(iii) the first data are protected by access rights.

3. The method according to any one of the preceding claims, wherein the link list defines access rights for different users or groups of users, and associating the first data with the model object comprises, if the first data are present:
checking access rights of a user for the first data;
if the user has access rights, associating the first data with the model object, so that the first data are available during processing of the design model;
if the user does not have access rights, associating the globally unique key with the model object so that only the globally unique key is available during processing of the design model.

4. The method according to claim 1, wherein reading in all model objects of the design model into the development environment comprises:
creating and reading in the first model object from a model library; and wherein
reading in a link list associating the model object with a globally unique key comprises:
reading in a link list belonging to the model object from the model library, said list associating a globally unique key with the model object.

5. The method according to claim 4, wherein optionally the model object is associated with a dedicated unique global key or the model object receives the global key of the model library object.

## Revendications

1. Procédé pour traiter un modèle de conception assistée par ordinateur pour le développement d'unités de commande électroniques dans un environnement de conception, sachant que le modèle de conception comprend au moins un modèle d'objet avec de premières données,
sachant que les premières données sont des données supplémentaires utilisées seulement pour des stades de développement individuels du dispositif de commande,
avec les étapes :
lecture de tous les modèles d'objet du modèle de conception dans l'environnement de développement ;
lecture d'une liste d'assignation attribuant à chaque modèle d'objet une clé respective globalement univoque ;
soit, si les premières données sont disponibles :
lecture des premières données à partir d'un premier emplacement de mémorisation, sachant que les premières données contiennent la clé globalement univoque ; et, ensuite, assignation des premières données au modèle d'objet à l'aide de la clé globalement univoque de sorte que les premières données soient disponibles pendant l'édition du modèle de conception ;
ou, si les premières données ne sont pas disponibles :
assignation de la clé globalement univoque au modèle d'objet de sorte que la clé globalement univoque soit disponible pendant l'édition du modèle de conception ;
édition du modèle de conception ;
mémorisation de la liste d'assignation, dans laquelle la clé globalement univoque est assignée au modèle d'objet ; sachant que la mémorisation comprend :
si les premières données étaient disponibles pendant l'édition, génération d'une nouvelle clé globalement univoque, qui remplace la clé globalement univoque précédente,
si les premières données n'étaient pas disponibles pendant l'édition, maintien de la clé globalement univoque ;
mémorisation des premières données en commun avec la clé globalement univoque ; mémorisation de tous les modèles d'objet du modèle de conception ;

2. Procédé selon la revendication 1, sachant que les premières données ne sont pas disponibles si
(i) les premières données n'existent pas ;
(ii) les premières données sont protégées par un mode de passe ou
(iii) les premières données sont protégées par une autorisation d'accès.

3. Procédé selon l'une des revendications précédentes, sachant que la liste d'assignation définit des autorisations d'accès pour des utilisateurs ou des groupes d'utilisateurs différents, et l'assignation des premières données au modèle d'objet, si les premières données existent, comprend :
vérification d'une autorisation d'accès d'un utilisateur pour les premières données ;
si un droit d'accès de l'utilisateur existe, assignation des premières données au modèle d'objet de sorte que les premières données soient disponibles pendant l'édition du modèle de conception ;
si aucun droit d'accès de l'utilisateur n'existe, assignation de la clé globalement univoque au modèle d'objet de sorte que seule la clé globalement univoque soit disponible pendant l'édition du modèle de conception.

4. Procédé selon la revendication 1, sachant que la lecture de tous les modèles d'objet du modèle de conception dans l'environnement de développement comprend :
création et lecture du premier modèle d'objet depuis une bibliothèque de modèles ; et
sachant que la lecture d'une liste d'assignation attribuant une clé globalement univoque au modèle d'objet comprend :
lecture d'une liste d'assignation appartenant au modèle d'objet depuis la bibliothèque de modèles, qui attribue au modèle d'objet une clé globalement univoque.

5. Procédé selon la revendication 4, sachant qu'une propre clé globalement univoque est en option attribuée au modèle d'objet ou il obtient la clé globale objet de bibliothèque de modèles.
